# EUROPEAN PATENT APPLICATION

(11) **EP 0 982 910 A1**
(43) Date of publication of application: **01.03.2000**
(21) Application number: 99306457.5
(22) Date of filing: 17.08.1999
(51) Int. Cl.: H04M 1/23, H04M 1/56

(54) **Key echo**

(30) Priority: 24.08.1998 US 139067
(71) Applicant: LUCENT TECHNOLOGIES INC., Murray Hill, New Jersey 07974-0636 (US)
(72) Inventor: DeLaurentis, Lisa M., Montville, New Jersey 07045 (US); Noviello, Frank John, Lansdale, Pennsylvania 19446 (US); Rohrbach, William Russell, Towaco, New Jersey 07082 (US)
(74) Representative: Buckley, Christopher Simon Thirsk

(57) **Abstract**

A terminal (100) has a feedback device (14;20) and keys (120) that have an echo state and a register state. When a key is in the echo state, the feedback device (14; 20) provides feedback identifying which key is selected. When the key is in the register state, the terminal processes the key. The feedback device can be an audio (14), a visual (20), or an audio-visual display. Getting feedback on which key is being selected without registering the key allows a user to determine if the key the user is selecting is the key the user wants to select. This saves the user the many keystrokes that would otherwise be involved in either clearing the key and entering the correct one, or clearing the entire operation and reentering all of the information needed to set up the operation. This is particularly advantageous for wireless telephones. A wireless telephone (100) having an audio display that announces the key before it is registered allows a user to dial a telephone number without looking at the wireless phone (100).

## Description

### Field of the Invention

This invention is related to terminals, and more particularly to receiving feedback when entering data on a terminal.

### Background of the Invention

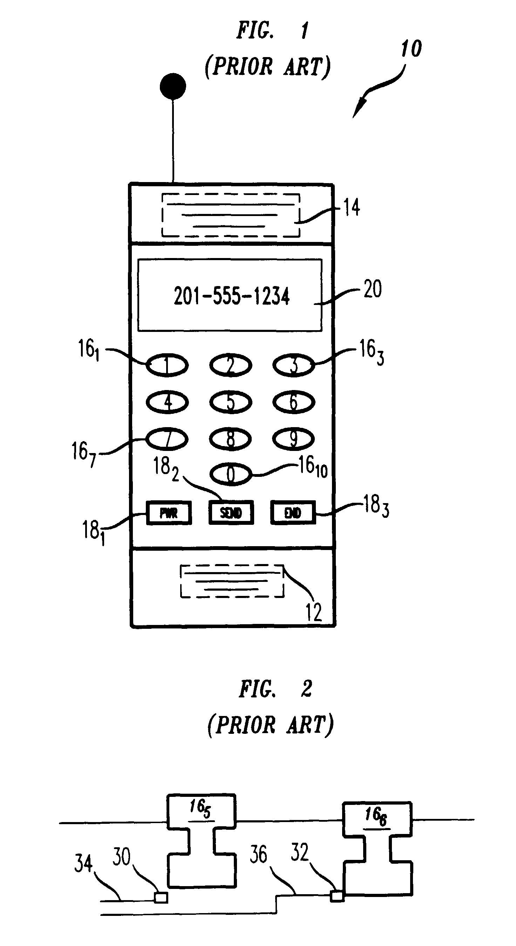

A terminal is a device that allows a user to input data into a system, such as a computer system or a telephone network, usually through depressing keys located in the terminal. Typically, a terminal will also include a way to display the data input into the system, such as an LCD display. Some examples of a typical terminal are: a mobile station of a wireless telephone network, hereinafter wireless telephone, a handset for a wired telephone, a computer workstation, a stand alone computer, and a calculator. A terminal can either send the data to the system, such as the wireless telephone or workstation, or the terminal can contain the system that processes the data. Figure 1 illustrates terminal 10. Terminal 10 includes microphone 12, speaker 14, plurality of data keys 16₁ . . . 16₁₀, plurality of function keys 18₁ . . . 18₃, and display 20. Terminal 10 also includes a control circuit (not shown), such as a CPU, for processing the data entered through keys 16₁ . . . 16₁₀ and 18₁ . . . 18₃. Each of keys 16₁ . . . 16₁₀ and 18₁ . . . 18₃ is connected to the control circuit. When one of keys 16₁ . . . 16₁₀ or 18₁ . . . 18₃ is depressed, the identity of the key is sent to the control circuit and the key is registered. For data keys 16₁ . . . 16₁₀ the identity of the key is an alphanumeric character, typically a number or letter. Registering a data key involves entering the number corresponding to the key into memory for dialing or other transmission purposes, or entering the letter corresponding to the key for transmission purposes. For function keys 18₁ . . . 18₃ the identity of the key is a function, such as power, send, or end. Registering a function key involves executing the function associated with the key. When a key is registered, the control circuit typically also sends the identity of the key to display 20.

Figure 2, illustrates two keys and the associated components for sending the identity of the keys to the control circuit. The keys can be any two of keys 16₁ . . . 16₁₀ or 18₁ . . . 18₃, for example 16₅ and 16₆. Contacts 30 and 32 are associated with keys 16₅ and 16₆, respectively. Contacts 30 and 32 are connected to the control circuit by signal lines 34 and 36, respectively. Contacts 30, 32 are located such that keys 16₅, 16₆ touch contacts 30, 32 when keys 16₅, 16₆ are depressed. In some terminals, the keys touch the contacts only when the keys are fully depressed. In other terminals the keys touch the contacts when the keys are either fully or partially depressed. Key 16₅ is not depressed and therefore does not touch contact 30, making the voltage on signal line 34 low, a logic state of 0. Key 16₆ is depressed, touching contact 32, producing a high voltage on signal line 36, a logic state of 1. This informs the control circuit that the key is depressed. The control circuit registers the key.

The inventors have discovered that a problem with conventional terminals is that when a user is inputting data into terminal 10 the user does not get any feedback on what data was actually input until the data is already registered in the system. Not receiving feedback on the data being entered is particularly difficult for the user when the conditions lend themselves to the user not being able to clearly see the keys. This may cause the user to often depress keys that the user did not intend to depress. For example, the user is not able to clearly see the keys when it is dark, or when it is dangerous for the user to look at the keys, such as when the user is driving.

Some of the keys require a function to be executed when the key is registered, such as function keys 18₁ . . . 18₃. When a user accidentally depresses the wrong key, the incorrect function is performed. This will require the user to reset the system and reenter any previous data that was required to set up the function. Other keys, such as data keys 16₁ . . . 16₁₀, cause data to be stored for future use by the system, such as entering the digits of a telephone number that will be dialed when the send key is depressed. When a user accidentally depresses the wrong key, the key is registered and the wrong number is entered for dialing. The user may either have to clear all of the numbers entered and start all over again, which involves many extra keystrokes, or possibly hit a special reverse button to clear the incorrect key and attempt to enter the correct key, which also involves many extra key strokes.

The results of depressing an undesired key are particularly confusing and inconvenient when the conditions are such that the user is not able to clearly see the keys, such as when the user is driving. This is an undesirable and possibly dangerous condition, since to avoid this the user has to look at the keys to make sure the user is depressing the correct keys. This causes the user to not look as carefully at the road, which can cause injury to the user or to others.

### Summary of the Invention

The invention solves the above problems by providing a terminal having a feedback device and keys that have an echo state and a register state. When a key is in the echo state, the feedback device provides feedback, identifying which key is selected. When the key is in the register state, the terminal registers the key. Getting feedback on which key is being selected without registering the key allows a user to determine if the key the user is selecting is the key the user wants to select. This saves the user the many keystrokes that would otherwise be involved in either clearing the key and entering the correct one, or clearing the entire operation and reentering all of the information needed to set up the operation. In the preferred embodiment the feedback device is a speaker. The speaker is a particularly advantageous feedback device for applications such as entering data while driving. The speaker allows the user to receive feedback on which key the user is selecting before the key is registered without looking at the terminal, therefore increasing the safety of the user and other drivers on the road.

### Brief Description of the Drawings

It should be noted that the Figures are drawn to best illustrate preferred embodiments of the invention and are not drawn to scale. The same numbering is used for the same or similar elements where possible.
Figure 1 is a front view of a mobile phone;
Figure 2 is a cross section of a portion of a convention terminal illustrating several keys and supporting circuitry for registering the keys;
Figure 3 is a block diagram of a terminal;
Figure 4 is a cross section of a portion of a terminal illustrating several keys and one type of supporting circuitry for implementing keys with an echo state and a register state;
Figure 5 is a block diagram of an encoder for encoding signal lines from the keys of Figure 4 into fewer signal lines;
Figure 6 is a cross section of a portion of a terminal illustrating a key and another type of supporting circuitry for implementing keys with an echo state and a register state;
Figure 7 is a cross section of a portion of a terminal illustrating a key and still another type of supporting circuitry for implementing keys with an echo state and a register state;
Figure 8 illustrates a method of operation of the CPU for the keys and encoder shown in Figure 5;
Figure 9 is table illustrating the operation of the encoder of Figure 5; and
Figure 10 is a front view of a mobile unit.

### Detailed Description

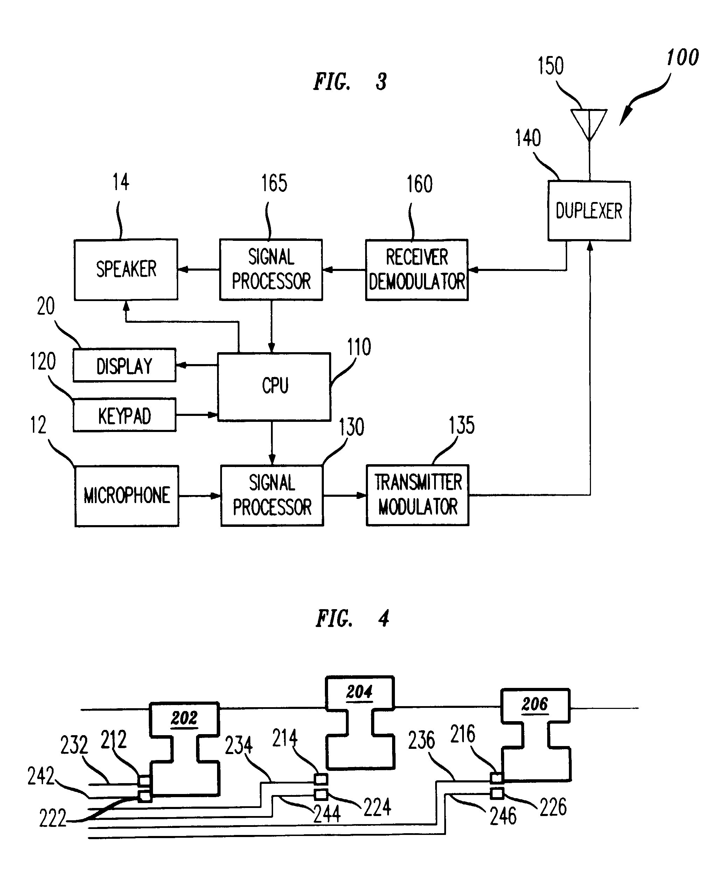

Figure 3 is a block diagram of a terminal, such as a wireless telephone, according to an embodiment of the present invention, generally designated by reference numeral 100. Although terminal 100 shown in Figure 3 is a wireless telephone, the terminal can be any terminal, for example a terminal for a wired telephone, a computer workstation, a stand alone computer, or a calculator. Terminal 100 includes a control circuit, keypad 120, and display 20. The control circuit can be any processor or application specific integrated circuit (ASIC) that can receive a signal from keypad 120, process the signal to identity which key of keypad 120 is activated, and send a signal to display 20 and/or speaker 14. For example the control circuit can be CPU 110, a microcontroller, or a microprocessor.

Terminal 100 also contains microphone 12. When the user speaks into microphone 12, the microphone converts the user's speech into a voice signal. The voice signal is sent to signal processor 130, which digitizes the signal and encodes it for transmission. The signal is then sent to transmitter/modulator 135. Transmitter/modulator 135 modulates a carrier wave with the signal from signal processor 130. The signal is then sent to duplexer 140 and transmitted to a wireless telephone network base station via antenna 150. CPU 110 also sends control signals to the base station by sending information to signal processor 130. The control signals are processed through signal processor 130, transmitter/modulator 135 and duplexer 140, and are transmitted through antenna 150. Control signals sent to the base station typically contain power level information, bit error rate information, and requests for channel assignments.

Antenna 150 also receives signals. The received signals go through duplexer 150 to receiver/demodulator 160. Receiver/demodulator 160 demodulates the information signal from the carrier wave and sends it to signal processor 165. Signal processor 165 decodes the signal and sends it to speaker 14. Additionally, control signals sent from the base station to the wireless telephone are separated from the data portion of the signal in signal processor 165 and sent to CPU 110. Control signals received from the base station typically contain power level information and channel assignments.

Key pad 120 contains a plurality of data keys, and a plurality of function keys. When a key is placed into an echo state, the identity of the key is passed to CPU 110. For the data keys the identity of the key is an alphanumeric character, typically a number or letter, and for the function keys the identity of the key is the function, such as power, send, or end. CPU 110 then gives feedback to the user identifying which key has been selected by sending the identity of the key to display 12 or speaker 14, or both, however the key is not yet registered. Registering the key involves starting to process the key by any of the control circuits, such as CPU 110. For data keys usually this means entering the digit corresponding to the key into a register or other memory for dialing or for other transmission purposes, or entering the letter corresponding to the key for transmission purposes. For the function keys this means executing the function associated with the key.

To register the key, the key should be placed into the register state. When a key is placed into the register state the identity of the key is sent to CPU 110 and the key is registered. Preferably, if a key does not enter the register state in a certain period of time after the key enters the echo state, the identity of the key is removed from display 20. This can be accomplished by setting a counter in CPU 110 that is started when a key enters the echo state. If the key does not enter the register state after the certain time period, or if another key enters the echo or register state before the key enters the register state, CPU 110 sends instruction to display 20 to remove the identity of the key from display 20.

Figure 4 illustrates keys 202, 204, 206 of keypad 120 and one type of supporting circuitry for implementing keys with an echo state and register state. Keys 202, 204, 206 can be either data or function keys. The supporting circuitry has one echo contact 212, 214, 216 and one register contact 222, 224, 226 for each of keys 202, 204, 206, respectively. Signal lines 232, 234, 236 connect each of echo contacts 212, 214, 216 to the CPU. Signal lines 242, 244, 246 connect each of the register contacts to the CPU. When keys 202, 204, 206 are not in contact with the contacts, a first voltage is on signal lines 232, 234, 236, 242, 244, 246, causing them to provide a first logic state to the CPU. Since the circuitry is in the first state for a majority of the time, the first voltage is preferably low, allowing the circuit to conserve power. A low voltage makes the logic state provided to the CPU a 0. When a key is in contact with one of the contacts the voltage on the respective signal line changes to a second voltage, preferably high, making the logic state provided to the CPU a 1. The contacts can be implemented in any known manner. For example, the contacts can contain an open circuit that is closed by a key when a portion of the key reaches the height of the open circuit. When the circuit is closed by the key, the voltage on the signal lines changes. In another example, each contact can have a sensor that detects when the key is at the height of the sensor and change the voltage on the signal line responsively.

Referring to Figures 3 and 4 concurrently, key 204 illustrates a key in the fully raised position, i.e. it is non-depressed. Therefore, key 204 does not make contact with either echo contact 214 or register contact 224. The logic state provided by both signal lines 234 and 244 to CPU 110 is a 0. Key 206 illustrates a key in the echo state. Key 206 makes contact with echo contact 216, which sends a logic 1 along signal line 236 to CPU 110. CPU 110 receives the signal sent on signal line 236 and sends the identity of the key 206 to speaker 14 and/or display 20. Key 202 illustrates a key in the register state. Key 202 contacts both echo contact 212 and register contacts 222. The circuitry can be arranged such that key 202 needs to be fully depressed before it contacts register contact 222, or key 202 can be depressed partially, but further than the height needed to contact echo contact 212.

As key 202 is being depressed, key 202 contacts echo contact 212, sending a 1 to CPU 110 on signal line 232. CPU 110 sends the identity of the key 206 to speaker 14 and/or display 20. Key 202 then contacts register contact 222, sending a 1 to CPU 110 on signal line 242, signaling to CPU 110 to register the key. It is preferable to have circuitry such that keys 202, 204, 206 will first contact echo contacts 212, 214, 216 and then contact register contacts 222, 224, 226. However, the circuitry can be arranged such that the keys can contacts register contacts 222, 224, 226 without first having to contact the echo contacts 212, 214, 216.

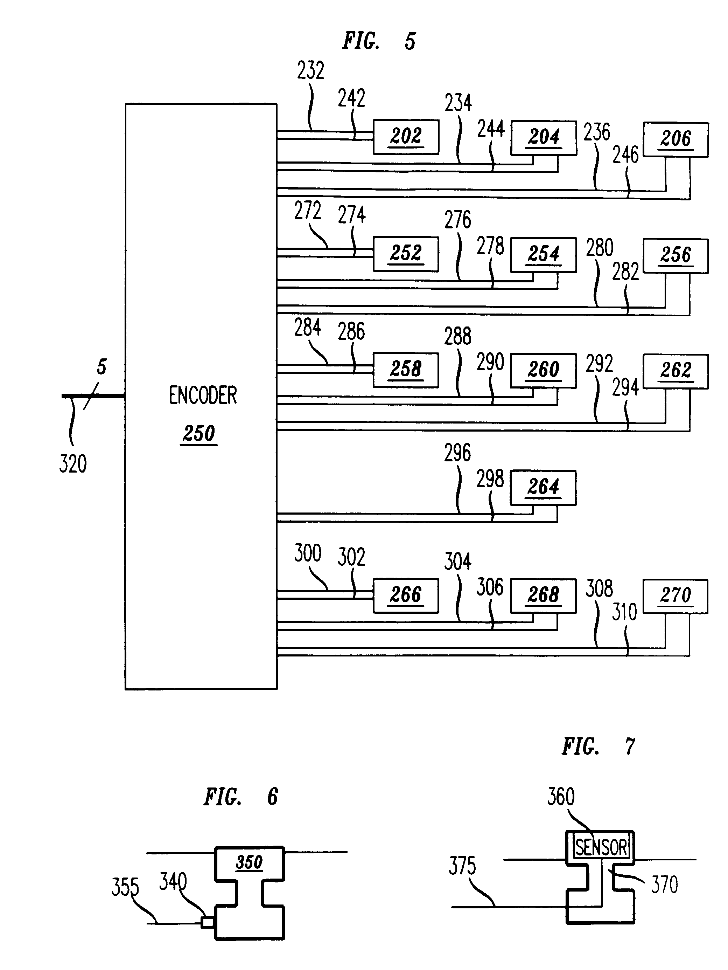

Referring to Figure 5, the signal lines can be either directly connected to the CPU or, as shown in Figure 5, the signal lines can be connected to the CPU through encoder 250. The signal lines run from each of the keys to encoder 250, where the signal lines are encoded into fewer signal lines that run from encoder 250 to the CPU. The configuration shown in Figure 4 having 10 data keys 202, 204, 206, 252, 254, 256, 258, 260, 262, 264 and three function keys 266, 268, 270, with two signal lines per key produces a total of 26 lines, which are encoded as 5 signal lines 320 by encoder 250. The 5 signal lines 320 are connected to the CPU. Encoder 250 can be implemented using a device such as a programmable read-only memory.

Alternatively, as shown in Figure 6, instead of two contacts, the supporting circuitry can be implemented using one contact 340 per key 350 and a counter. Contact 340 detects when key 350 is depressed, changing the voltage on signal line 355 and sending a logic 1 to the CPU. This starts the counter. The counter can be one of the counters in the CPU or a separate counter connected to the CPU. When key 350 has been depressed for a first time period, the key is in the echo state. The CPU sends the identity of the key to the feedback device. The first time period can be very short, and key 350 can enter the echo state almost instantaneously after key 350 is depressed, or the first time period can be zero seconds and key 350 enters the echo state when the key 350 is depressed. If the user has not released key 350 after a longer period of time, hereinafter second time period, the CPU registers the key. The second time period should be long enough for the identity of key 350 to be heard on the speaker and for an average user's response time to allow the user to stop depressing key 3 50 if the user so chooses. For example the second time period can be two to four seconds. Optionally, a feature can be added to the terminal to allow the user to customize the second time period.

Figure 7 illustrates another alternative for implementing the keys and the supporting circuitry. Sensor 360 can be used in key 370 to detect that key 370 is being selected. Sensor 360 can be any type of sensor that can detect that the user's finger is close to the sensor, such as an infrared sensor, or that the user's finger is touching the sensor, such as a capacitive sensor. When sensor 360 detects the user's finger or other actuation device in close proximity to key 370, sensor 360 changes the voltage on signal line 375 and sends a logic 1 to the CPU. In one embodiment of the invention, this starts a counter. After a first time period, key 370 enters the echo state, and the CPU sends the identity of the key to the feedback device. If the actuation device is still in proximity of key 370 after the second time period, the CPU registers the key. In another embodiment of the invention, a register contact, as in Figure 4 can be added to each key. Key 370 enters the echo state when the sensor 360 detects an actuation device, and key 370 enters the register state when key 370 is depressed enough to contact the register contact. Like the keys of Figure 4, the keys of Figures 6 and 7 can be connected to the CPU through the encoder, as shown above with reference to Figure 5.

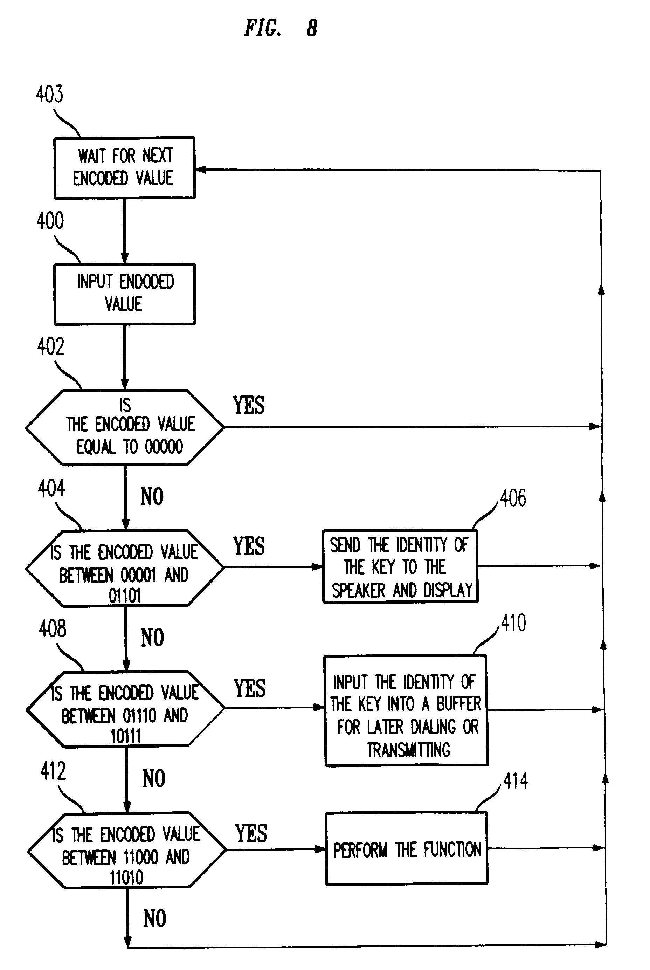

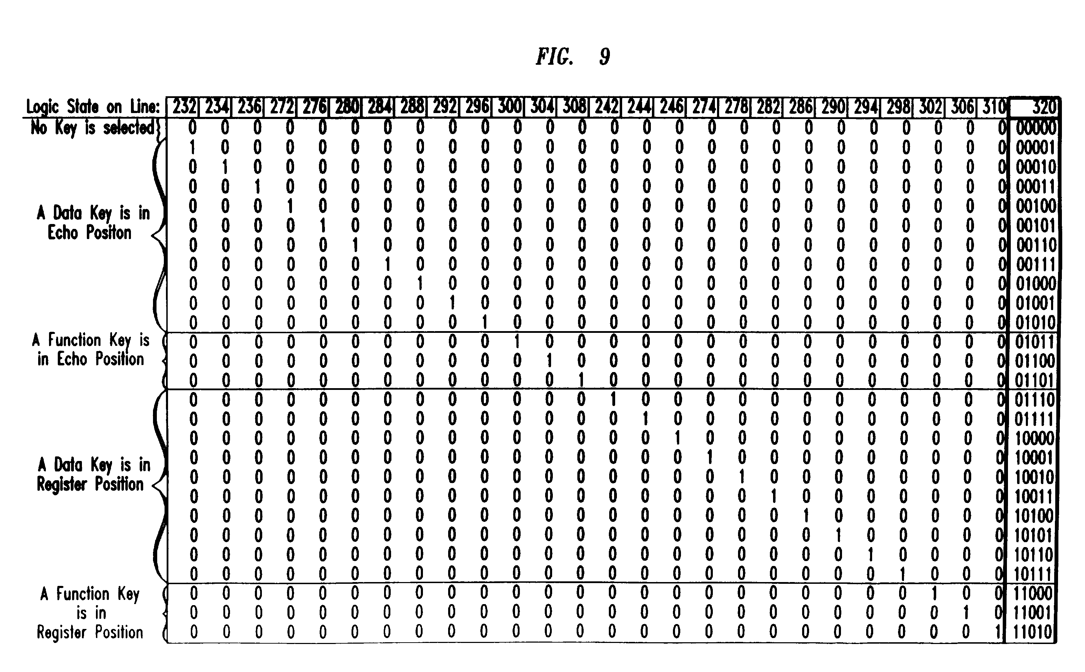

Figure 8 illustrates a method of operation of the CPU for the keypad and encoder shown in Figure 5. Figure 9 shows the output of encoder 250, i.e. the logic state on signal lines 320, based on the inputs to encoder 250, i.e. the logic state on the signal lines from the echo contacts 232, 234, 236, 272, 276, 280, 284, 288, 292, 296, 300, 304, 308, and from the register contacts 242, 244, 246, 274, 278, 282, 286, 290, 294, 298, 302, 306, 310. Referring to Figures 5 and 9 concurrently, when none of the keys are depressed, all of the signal lines have a low voltage on them producing a 00000 on signal lines 320. The signals on the signal lines from the echo contacts of the data keys that indicate that a data key is in the echo state are encoded using bit settings 00001 to 01010 of lines 320. The signals on the signal lines from the echo contacts of the function keys that indicate that a function key is in the echo state are encoded using bit settings 01011 to 01101. The signals on the signal lines from the register contacts of the data keys that indicate that a data key is in the register state are encoded using subsequent bit settings 01110 to 10111. The signals on the signal lines from the register contacts of the function keys that indicate that a function key is in the register state are encoded using bit settings 11000 to 11010. This encoding order has been chosen for convenience, and the order of how the signal lines are encoded can be easily changed by one skilled in the art.

Referring again to Figure 8, in step 400 the encoded value is received by the CPU. In step 402, the encoded value is compared to 00000. If the encoded value is 00000 no key is in the echo or in the register state and the CPU returns to step 403 to wait for the input of the encoded value. Otherwise, the encoded value is checked to see if it is between 00001 and 01101, in step 404. If yes, one of the keys is in the echo state and in step 406 the CPU sends the identity of the key corresponding to the encoded value to the speaker and/or to the display. The CPU then returns to step 403 to wait for the input of the encoded value. If the answer to the comparison in step 404 is no, the encoded value is checked to see if it is between 01110 and 10111, in step 408. If yes, one of the data keys is in the register state, and in step 410 the CPU inputs the digit or letter corresponding to the key into a buffer for transmitting or dialing. The CPU then returns to step 403 to wait for the input of the encoded value. Otherwise, in step 412 the encoded value is checked to see if it is between 11000 and 11010. If yes, one of the function keys is in the register state, and in step 414 the CPU performs the function, and returns to step 403 to wait for the input of the encoded value. If the answer to comparison in step 412 is no, then in step 403, the CPU returns wait for the input of the encoded value.

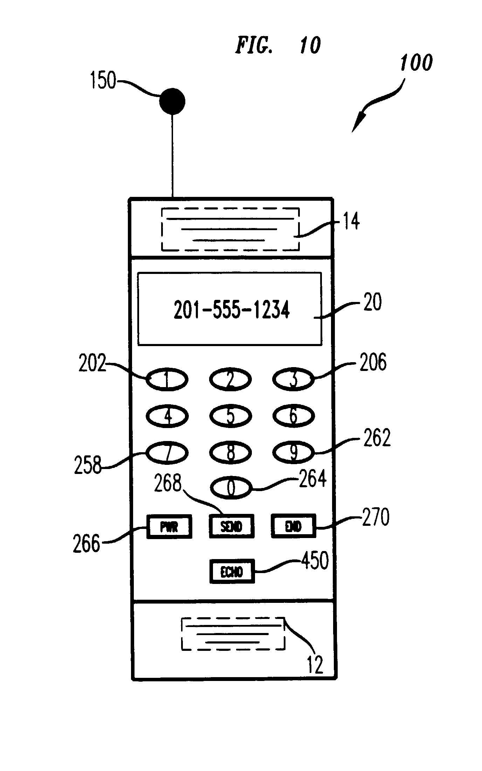

Referring to Figure 10, optionally, key 450 can be added to turn the feedback function on or off. Key 450 allows the user to have feedback when desired, such as when the user is driving, and to not have feedback when the user desires to disable the feedback function. Optionally, key 450 can be designed to turn a portion of the feedback function on or off. For example, depressing key 450 once turns the feedback function for the speaker on and off, and depressing key 450 twice rapidly turns the feedback function for the display on and off.

While the invention has been described with reference to a preferred embodiment, it will be understood by those skilled in the art having reference to the specification and drawings that various modifications may be made and various alternatives are possible therein without departing from the spirit and scope of the invention.

## Claims

1. A terminal (100) characterized in that:
a plurality of keys (202 ... 270; 350; 370; 450), each key having an echo state and a register state;
a control circuit (110) coupled to the plurality of keys (202 . . . 270; 350; 370; 450); and
a feedback device (14; 20) coupled to the control circuit (110) such that the feedback device (14; 20) receives data from the control circuit (110), the feedback device (14; 20) capable of identification of one of the plurality of keys (202 . . . 270; 350; 370; 450).

2. The terminal of claim 1, characterized in that:
the echo state being activated by the key depressed to a first height; and
the register state being activated by the key being depressed to a second height, the second height lower than the first height.

3. The terminal of claim 1, characterized in that:
the key further includes a sensor (360);
the echo state being activated by the key fully raised and the sensor actuated; and
the register state being activated by the key at least partially depressed.

4. The terminal of claim 1, characterized in that:
the echo state being activated by the key being depressed for a first time period; and
the register state being activated by the key being depressed for a second time period, the second time period longer than the first time period.

5. The terminal of claim 1, characterized in that:
the echo state being activated by the key being depressed; and
the register state being activated by the key being depressed for a time period.

6. The terminal of claim 1, characterized in that the feedback device comprises a video display (20).

7. The terminal of claim 1 or 6, characterized in that the feedback device further comprises a speaker (14).

8. The terminal of claim 1, characterized in that the control circuit (110) compnses a microprocessor.

9. The terminal of claim 1, characterized in that the terminal comprises a wireless telephone (100).

10. The terminal of claim 1, characterized in that:
the plurality of keys (202 . . . 270; 350; 370; 450) are located on a keypad (120); and
the control circuit comprises a processor (110), the processor (110) is coupled to the keypad (120).

11. A method of operating a terminal (100) having a plurality of keys (202 ... 270; 350; 370; 450) and a feedback device (14; 20), characterized in that the method comprises the steps of:
causing one of the plurality of keys (202 . . . 270; 350; 370; 450) to enter the echo state;
generating a symbol corresponding to the key on the feedback device (14;20) without registering the key;
causing the key to enter the register state; and,
registering the symbol corresponding to the key.

12. The method of claim 11, characterized in that:
causing the key to enter the echo state includes depressing the key for a first time penod; and
causing the key to enter the register state includes depressing the key for a second time period, the second time period being longer than the first time period.

13. The method of claim 11, characterized in that:
the key further includes a sensor (360);
causing the key to enter the echo state includes actuating the sensor; and
causing the key to enter the register state includes at least partially depressing the key.
